# EUROPEAN PATENT APPLICATION

(11) **EP 0 784 197 A1**
(43) Date of publication of application: **16.07.1997**
(21) Application number: 95923551.6
(22) Date of filing: 30.06.1995
(51) Int. Cl.: G01B 7/00, A63F 7/02

(54) **MATRIX SENSOR AND PRODUCTION METHOD THEREFOR**

(30) Priority: 06.07.1994 JP 154674/94
(71) Applicant: KABUSHIKI KAISHA ACE DENKEN, Taito-ku, Tokyo 110 (JP)
(72) Inventor: TAKEMOTO, Takatoshi Kabushiki Kaisha Ace Denken, Taito-ku Tokyo 110 (JP); HANDA, Shigeru, Tokyo 192-03 (JP)
(74) Representative: Bloch, Gérard
(86) International application number: JP9501304
(87) International publication number: WO9601409

(57) **Abstract**

A plurality of parallel transmission lines (22) and a plurality of parallel reception lines (26) are disposed crosswise in order to provide a matrix sensor having desired accuracy and quality. In this arrangement, the transmission lines cross alternately over and under the reception lines so that the lines may be prevented from becoming loose.

## Description

### TECHNICAL FIELD

The present invention relates to a matrix sensor in which a plurality of parallel-arranged conductive transmission lines and a plurality of parallel-arranged conductive reception lines are arranged on a substrate while crossing each other.

### BACKGROUND TECHNIQUE

A matrix sensor is used to detect the locus of a motion of a metal body which moves in a specific plane area, or to detect the distribution pattern of metal bodies which are distributed in a specific area or the like.

As an example of the former case there is known detection of the locus of a motion of a pachinko ball (Japanese pinball) in a pachinko game machine.

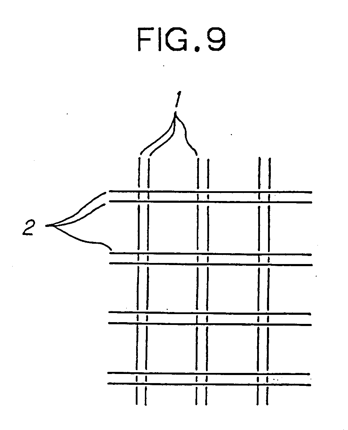

Fig. 9 shows a conventional example of a metal body detection portion of this type of matrix sensor.

That is, this matrix sensor is designed as follows. Transmission lines 1 formed of a plurality of conductive lines which are arranged in parallel and reception lines 2 formed of a plurality of conductive lines which are arranged in parallel, are arranged while crossing each other, and then these lines are connected to a routing substrate, then adhesively attached to a glass body substrate, and then secured to a glass door on the front surface of the pachinko game machine.

In such a conventional matrix sensor, either all of the plurality of transmission lines or all of the plurality of reception lines are arranged, and then the other lines are all arranged while crossing over the former lines.

That is, after all the transmission lines are arranged in a longitudinal direction, all the reception lines are arranged in a lateral direction while being transversely superposed on the transmission lines. Therefore, there is a problem that the conductive lines are liable to be slack when these lines are adhered to the glass body substrate by UV.

Furthermore, when the slackness becomes great, such a defective product must be scrapped because a desired precision and quality cannot be attained and thus it is unusable. Therefore, there is a problem that the yield is lowered.

### DISCLOSURE OF THE INVENTION

The present invention has been achieved in view of the problems of the prior art as described above, and has an object to provide a matrix sensor in which transmission lines and reception lines do not have much slack to achieve desired precision and quality, and which can be produced at high yield.

In order to attain the above object, a matrix sensor according to the present invention in which a plurality of parallel-arranged transmission lines and a plurality of parallel-arranged reception lines are arranged on a substrate while crossing each other, is characterized in that with respect to at least one line of at least one of the groups of transmission lines and reception lines, the relationship as to which of the transmission lines or the reception lines is uppermost is reversed at least once at cross points thereof.

Furthermore, in the present invention as described above, the arrangement may be performed so that the relationship as to which of the transmission lines and the reception lines is uppermost is reversed at a plurality of predetermined positions.

Still furthermore, in the present invention as described above, the arrangement may be such that the relationship as to which of the transmission lines and the reception lines is uppermost is alternately reversed, like a textile material.

Still furthermore, in the present invention as described above, the relationship, as to which of an m-th line (m represents an integer), which is counted from the end portion, of one group of the plurality of transmission lines or the plurality of reception lines, and an m-th line of the other group of lines is uppermost, is reversed compared to the relationship as to which of an (m+1)-th line of the one group of lines or an m-th line of the other group of lines is uppermost.

In order to attain the above object, according to the present invention, there is provided a method for manufacturing a matrix sensor which includes a plurality of transmission lines which are arranged in parallel, a plurality of reception lines which are arranged in parallel, a substrate for supporting the plurality of transmission lines and the plurality of reception lines, and a fixing portion which has a plurality of terminals and is adapted to arrange the plurality of transmission lines and the plurality of reception lines on the substrate, and in which the plurality of parallel-arranged transmission lines and the plurality of parallel-arranged reception lines are arranged on the substrate to cross each other so that the cross points thereof are arranged in a matrix form, characterized in that the fixing portion is fabricated at a predetermined position on the substrate; before all the lines of one group of transmission lines and reception lines are completely arranged, at least one line of the other group of lines is laid at least once to arrange the transmission lines and the reception lines; and the plurality of transmission lines and the plurality of reception lines thus arranged are connected to the fixing portion to adhesively attach the plurality of transmission lines and the plurality of reception lines to the substrate.

More specifically, when the plurality of transmission lines and the plurality of reception lines are arranged, the transmission lines and the reception lines are alternately arranged one by one while superposed on a previously-arranged line.

In place of the arrangement in which the plurality of transmission lines and the plurality of reception lines are alternately arranged one by one, these lines may be alternately arranged every so many lines of each group of lines.

In the matrix sensor according to the present invention or the matrix sensor which is manufactured by the matrix sensor manufacturing method of the present invention, with respect to at least one line of at least one group of transmission lines and reception lines, the relationship as to which of the line and the other group of lines is uppermost is reversed at least once at cross points thereof.

Therefore, even when slack occurs in the transmission lines or the reception lines thus arranged, the slack is prevented from extending beyond a reversing position where the relationship as to which of the transmission lines and the reception lines is uppermost is reversed. Accordingly, occurrence of large slack can be substantially totally suppressed. Further, the occurrence of slack itself can be reduced.

### BRIEF DESCRIPTION OF THE DRAWINGS

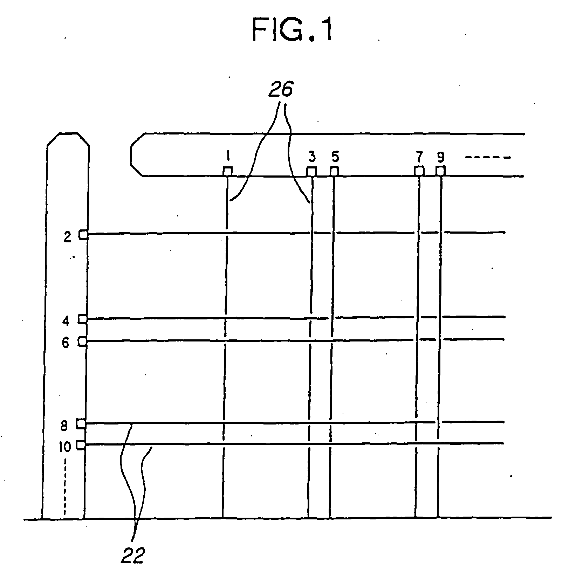

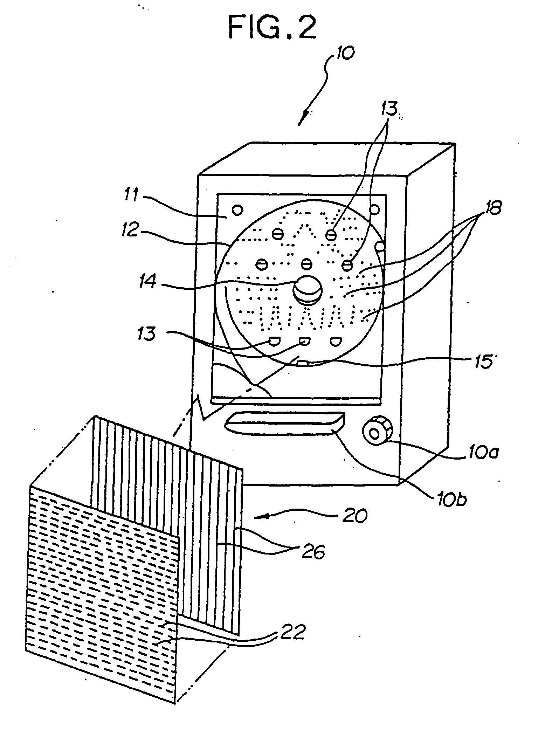

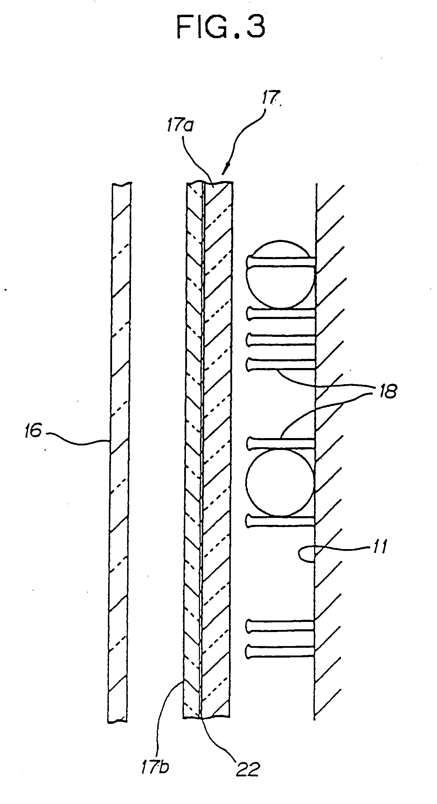

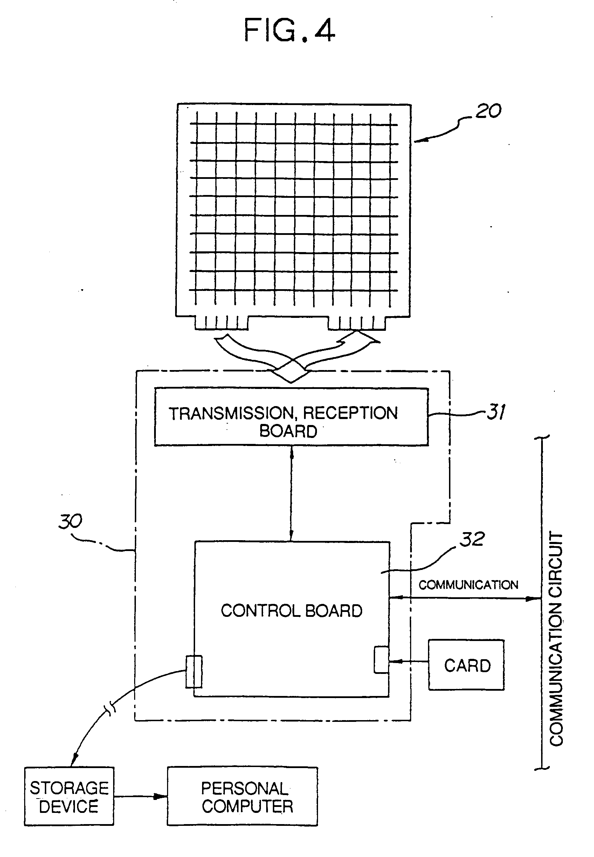

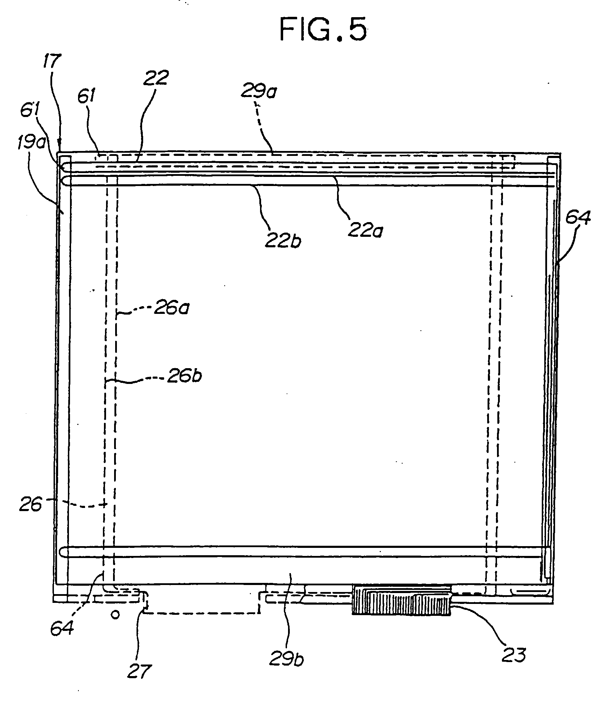

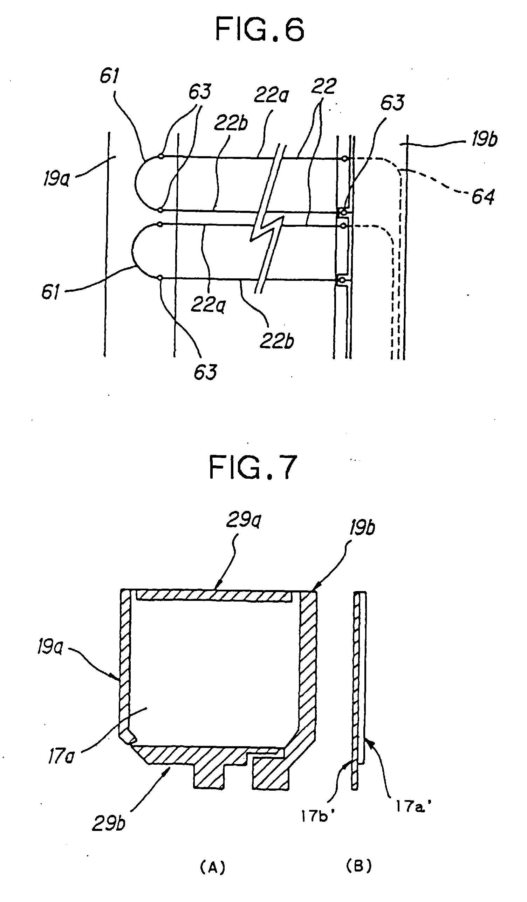

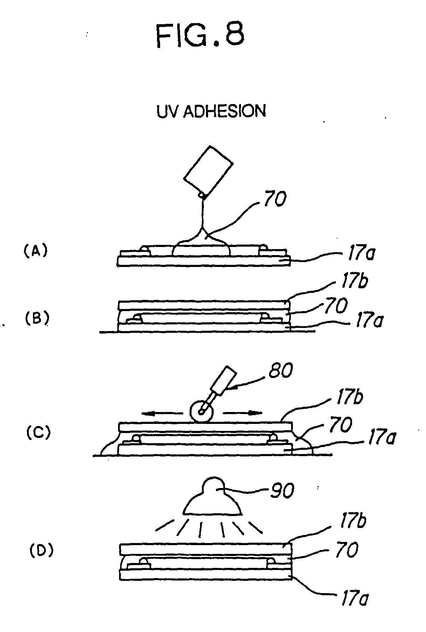

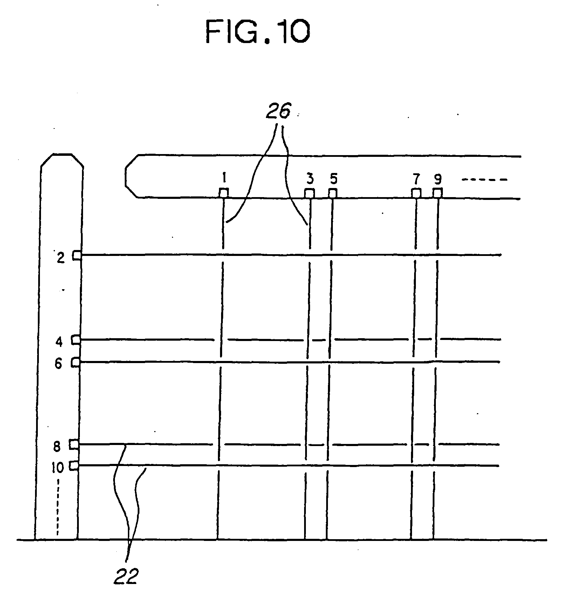

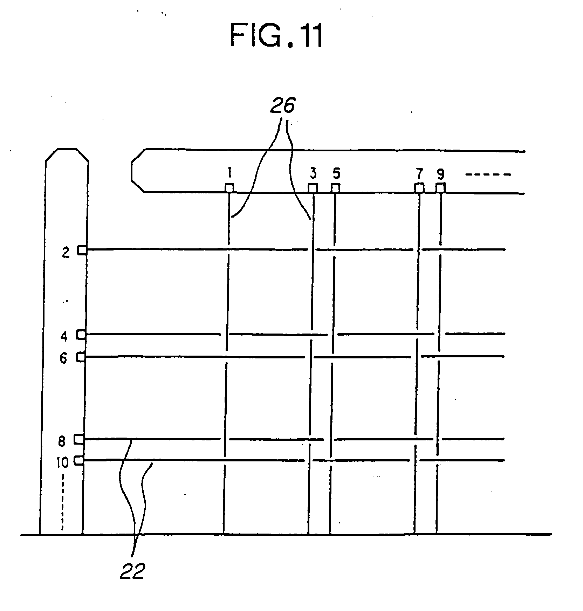

Fig. 1 is a diagram showing a main part of a detection portion of a matrix sensor according to an embodiment of the present invention. Fig. 2 is a perspective view showing an embodiment of a pachinko game machine using the matrix sensor of the first embodiment of the present invention. Fig. 3 is a side cross-sectional view showing a board face of the pachinko game machine using the matrix sensor according to the first embodiment of the present invention. Fig. 4 is a schematic diagram showing a metal body detection device using the matrix sensor according to the first embodiment of the present invention. Fig 5 is a front view showing the matrix sensor according to the first embodiment of the presents invention. Fig. 6 is a front view showing transmission lines and a routing portion. Figs. 7(A), (B) are front and side views showing a routing substrate and a folded substrate of the matrix sensor. Figs.8(A), (B), (C) ,(D) are diagrams showing a matrix sensor manufacturing process. Fig. 9 is a diagram showing a main part of a detection portion of a conventional matrix sensor. Fig. 10 is a diagram showing another embodiment of the matrix sensor of the embodiment of Fig. 1. Fig. 11 is a diagram showing another embodiment of the matrix sensor according to the embodiment of Fig. 1.

### PREFERRED EMBODIMENTS ACCORDING TO THE INVENTION

An embodiment of a matrix sensor to which the present invention is applied will be described with reference to the drawings.

Prior to the description of this embodiment, a pachinko game machine 10 to which this embodiment is applied will be described with reference to Figs. 2 and 3.

The pachinko game machine 10 includes a board face 11 for forming a space in which pachinko balls are moved, a surface glass body 16 which is disposed away from the board face 11 at a fixed distance to cover the board face 11, and a ball hitting device for hitting pachinko balls into a space which is partitioned by the board face 11 and the glass body 16.

The board face 11 is provided with a guide rail 12, and an area surrounded by the guide rail 12 serves as a game area of the pachinko game machine.

A pachinko ball which is hit while the hitting intensity thereof is adjusted by a handle 10a of the ball hitting device is upwardly moved along the guide rail 12, and discharged into the game area.

In the game area are provided a plurality of prize-wining ports 13 through which the predetermined number of pachinko balls are given out when a pachinko ball enters each port, a center bonus portion 14 which is located at the center portion of the board face 11 and achieves a specific award state under a predetermined condition, and an out-ball port 15 for discharging pachinko balls from the board face 11 when the pachinko balls enters no award port 13.

Further, many nails 18 for varying the moving direction of falling pachinko balls when impinging against the pachinko balls are provided over the game area of the board face 11.

Still furthermore, a pan 10b for receiving pachinko balls which are given out as prize-wining balls is provided on the front surface of the pachinko game machine 10 which is at the lower side of the board face 11.

Next, a matrix sensor 20 of this embodiment which is used in a metal body detection device for detecting metal pachinko balls moving in the pachinko game machine 10, will be described.

As shown in Fig. 4, the metal body detecting device comprises a matrix sensor 20 which has a detection area extending in a plane shape and functions as a metal sensor, and a signal processing device 30 which operates the matrix sensor 20 to detect the existence of a metal body and detect/specify the position thereof.

The signal processing device 30 has a transmission/reception board 31 which functions as transmission and reception means to operate the matrix sensor 20, and a control board 32 functioning as signal processing means which controls the transmission /reception board 31 to receive a detection signal and judge the presence or absence of a pachinko ball on the basis of the detection signal, and performs processing for specifying the position at which the pachinko ball is detected.

As shown in Fig. 5, the matrix sensor 20 has a plurality of transmission lines 22, a plurality of reception lines 26 and a substrate (base glass) 17a for supporting these lines.

The transmission lines 22 are respectively paired by a pair of conductive lines which are formed of copper wires constituting a sending path 22a and a returning path 22b which are parallel to each other. Likewise, the reception lines 26 are also paired by a pair of conductive lines which are formed of copper wires constituting a sending path 26a and 26b. The sending path and the returning path of the paired conductive lines are connected to each other at one end sides thereof by a turn-back portion 61, and the other end sides serve as input/output ends.

More specifically, as shown in Fig. 6, the transmission line 22 comprises a turn-back portion 61 formed on each turn-back substrate 19a, and conductive lines 22a and 22b which are connected to the turn-back portion 61.

As shown in Fig. 5, the reception line 26 comprises each turn-back portion 61 formed on a turn-back substrate 29a, and conductive lines 26a and 26b which are connected to the turn-back portion 61.

In this embodiment, as shown in Fig. 3, the matrix sensor 20 is fixed to the front glass which covers the board face 11 of the pachinko game machine 10. The front glass is disposed along the board face 11 of the pachinko game machine, and comprises a surface glass body 16 and an inside glass body 17.

The inside glass body 17 is provided with the transmission lines 22 and the reception lines 26 of the matrix sensor 20, and comprises a base glass 17a onto which a transmission-side routing substrate 19b, a reception-side routing substrate 29b, etc. are fixed, and a cover glass 17b which is adhesively attached to cover the conductive lines.

In order to reduce an electromagnetic induction effects from the outside of the pachinko game machine, the cover glass 17b is formed of ITO (indium tin oxide) at the surface side thereof which is opposite to the surface facing the board face 11 and thus faces the surface glass body 16. The cover glass 17b is not limited to ITO, and it may be formed of transparent conductive film.

Next, an example of the specific arrangement of the conductive lines on the matrix sensor 20 according to this embodiment will be described with reference to Fig. 1.

In the prior art, for example, all reception lines 1 are overlaid on transmission lines 2 which are arranged in parallel as shown in Fig. 9.

However, in this embodiment, as shown in Fig. 1, a first reception line 26 in a row direction (vertical direction in Fig. 1) (hereinafter referred to as a row first line) is first arranged, and then a second transmission line 22 in a line direction (lateral direction in Fig. 1) (hereinafter referred to as a line second line) is arranged. Subsequently, a row third line is arranged, and then a line fourth line is arranged. Thereafter, the conductive lines in the row direction and the line direction are alternately arranged one by one in the same manner.

In the case of the arrangement as described above, as is apparent from Fig. 1, the row first line is located below all the conductive lines in the line direction. On the other hand, the line second line which is first arranged in the line direction is overlaid on the row first line so as to cross the row first line, and is located below the conductive lines in the row direction other than the row first line so as to cross these conductive lines.

The row third line is transversely overlaid on the line second line, and located below the conductive lines in the line direction other than the line second line so as to cross these conductive lines. Further, the line fourth line is overlaid on the row first line and the row third line so as to cross these lines, and is located below the conductive lines in the row direction other than the row first and third lines so as to cross these lines.

Likewise, the row (2m-1)-th line is overlaid on the lines until the row (2m-2)-th line so as to cross these lines, and located below the other subsequent conductive lines in the line direction so as to cross these lines. Further, the line (2n)-th line is overlaid on the lines until the row (2n-1)-th line so as to cross these lines, and located below the other subsequent conductive lines in the row direction so as to cross these lines. Here, each of m and n represents an integer.

As shown in Fig. 5 and Fig. 6, the transmission lines 22 and the reception lines 26 respectively form a pair of conductive lines which constitute a sending path 22a, 26a and a returning path 22b, 26b which are parallel with each other. These pairs of conductive lines in the line direction and the row direction may be alternately disposed.

The input/output ends of the transmission lines 22 which are arranged on the substrate 17a as described above are connected to a transmission terminal portion 23 (see Fig. 5) through routing wires 64 as shown in Fig. 6. That is, the conductive lines 22a are routed to the output terminal of the transmission terminal portion 23 by the routing portion 64 formed on the transmission-side routing substrate 19b. The other conductive lines 22b are connected to a common terminal 63 which is provided on the transmission-side routing substrate 19b.

As shown in Fig. 5, the reception lines 26 are connected to a reception terminal portion 27 by each routing portion 64 formed on a reception-side routing substrate 29b whose input/output terminal portion is adhesively attached to the lower end of the base glass 17a. Although not shown, an input terminal is connected to the reception circuit and a common terminal is connected to the common side of the reception circuit, and these terminals are formed in the reception terminal portion 27 like at the transmission side.

Next, a method for manufacturing the matrix sensor 20 according to this embodiment will be described with reference to Figs. 7 and 8.

First, a transmission-side routing substrate 19b which is adapted to arrange and fix a plurality of transmission lines 22 and has a plurality of terminals, and a reception-side routing substrate 29b which is adapted to arrange and fix a plurality of reception lines 26 and has a plurality of terminals, are adhesively attached at predetermined positions on one surface 17b' of the base glass 17a serving as a substrate. The adhesion is performed by using a double-sided adhesive tape or adhesive agent.

The other surface 17a' of the base glass 17a is a face which confronts the board face 11 of the pachinko game machine 10, and each substrate as described above is not disposed at the side of the surface 17a' because pachinko balls may impinge on the substrate.

A transmission-side folded substrate 19a is adhesively attached to an edge portion on the base glass 17a, which confronts the transmission-side routing substrate 19b. Likewise, a reception-side folded substrate 29a is adhesively attached to an edge portion which confronts the reception-side folded substrate 29a.

A predetermined pattern is screen-printed on a bonding pad portion of each routing substrate (19b, 29b) by a cream solder.

Subsequently, all the transmission lines 22 are connected to the bonding pad portion of the transmission-side routing substrate 19b by solder, and all the reception lines 26 are connected to the bonding pad portion of the reception-side routing substrate 29b by solder.

The connection is performed in the order as shown in Fig. 1, for example. Numeral value in the figure represents an arrangement order. That is, a reception line 26 (a line indicated by numeral "1" in the figure) is arranged and connected in the vertical (row) direction, and then a transmission line 22 (a line indicated by numeral "2" in the figure) is arranged and connected in a lateral (line) direction. Subsequently, two reception lines 26 in the vertical direction (as indicated by numeral "3") are arranged and connected. Likewise, the conductive lines in the vertical direction and the lateral direction are alternately arranged and connected one by one.

Accordingly, in the transmission lines 22 and the reception lines 26 thus arranged, the row (2m-1)-th line is overlaid on the lines until the line (2m-2)-th line so as to cross these lines, and the relationship as to which of the lines is uppermost is reversed at the position where it crosses the line (2m)-th line. Subsequently, the row (2m-1)-th line is located below the other subsequent conductive lines in the line direction so as to cross these lines. Further, the line (2n)-th line is overlaid on the lines until the row (2n-1)-th line so as to cross these lines, and the relationship as to which of the lines is uppermost is reversed at the position where it crosses the row (2n+1)-th line. Subsequently, the line (2n)-th line is located below the subsequent conductive lines in the row direction so as to cross these lines.

Subsequently, a glass, for example, ITO glass 17b (see Fig. 3) is mounted on and adhered to the transmission lines 22 and the reception lines 26 thus arranged, and UV adhesion as an example of a method therefor will be described.

First, as shown in Fig. 8(A), a sufficient amount of UV adhesion agent 70 is poured on the base glass 17a on which the transmission lines 22 and the reception lines 26 are arranged.

Subsequently, the ITO glass 17b is mounted thereon (see Fig. 8(B)).

Subsequently, a roller 80 is rolled on the ITO glass 17b while pressed against the ITO glass 17b to squeeze out excess adhesive 70 (see Fig. 8(C)).

Finally, ultraviolet rays are irradiated from the upper side of the ITO glass 17b by a UV lamp 90 to harden the UV adhesive agent 70 (see Fig. 8(D)).

Slackening hardly occurs in the detection portion of the matrix sensor 20 thus manufactured because the relationship as to which of the transmission line 22 and the reception line 26 is uppermost is reversed at the portion where they cross each other. Even if any slack occurs, the slack is prevented from extending beyond the portion where the relationship as to which of the transmission line 22 and the reception line 26 is uppermost, is reversed so that there is little occurrence of significant slack.

In this embodiment, when a plurality of transmission lines 22 and a plurality of reception lines 26 are arranged, the number of lines at which the plurality of transmission lines 22 and the plurality of reception lines 26 are alternately arranged is set to 1. However, since the transmission lines 22 and the reception lines 26 are respectively paired by a pair of conductive lines which are formed of copper wires constituting the sending path 22a, 26a and the returning path 22b, 26b, the lines may be alternately arranged every pair.

Furthermore, in this embodiment, the relationship as to which of the lines is uppermost, is reversed at only one position for each of the transmission lines 22 and the reception lines 26. For example, as shown in Fig. 10, the line arrangement may be such that the relationship as to which of the lines is uppermost is reversed at a plurality of positions for each conductive line of either of the group of transmission lines 22 or reception lines 26, or as shown in Fig. 11, the line arrangement may be such that the relationship as to which of the lines is uppermost is reversed at a plurality of positions for each conductive line of both of the groups of lines.

As described above, according to the matrix sensor of this embodiment and the manufacturing method therefor, the occurrence of the slack of the transmission lines and the reception lines can be greatly reduced, so that the high-precision and high-quality matrix sensor can be manufactured at high yield.

## Claims

1. A matrix sensor in which a plurality of parallel-arranged transmission lines and a plurality of parallel-arranged reception lines are arranged on a substrate while crossing each other, characterized in that with respect to at least one line of at least one group of transmission lines and reception lines, the relationship as to which of the line and the lines of the other group of lines is uppermost is reversed at least once at cross points thereof.

2. The matrix sensor as claimed in claim 1, wherein the arrangement with respect to said at least one line is performed so that the relationship as to which of said transmission lines and said reception lines is uppermost is reversed at a plurality of predetermined positions.

3. The matrix sensor as claimed in claim 1, wherein the arrangement is performed so that the relationship as to which of said transmission lines and said reception lines is uppermost is alternately reversed at a plurality of predetermined positions for each of predetermined lines of both groups of said reception lines and said transmission lines.

4. The matrix sensor as claimed in claim 1, wherein the relationship, as to which of an m-th line (m represents an integer), which is counted from the end portion, of one group of the plurality of transmission lines or the plurality of reception lines, and an m-th line of the other group of lines is uppermost, is reversed compared to the relationship as to which of an (m+1)-th line of the one group of lines and an m-th line of the other group of lines is uppermost.

5. A method for manufacturing a matrix sensor which includes a plurality of transmission lines which are arranged in parallel, a plurality of reception lines which are arranged in parallel, a substrate for supporting the plurality of transmission lines and the plurality of reception lines, and a fixing portion which has a plurality of terminals and is adapted to arrange the plurality of transmission lines and the plurality of reception lines on the substrate, and in which the plurality of parallel-arranged transmission lines and the plurality of parallel-arranged reception lines are arranged on the substrate to cross each other so that the cross points thereof are arranged in a matrix form, characterized by comprising the steps of :
fabricating said fixing portion at a predetermined position on said substrate;
before all the lines of either of the group of said transmission lines or said reception lines are completely arranged, arranging at least one line of the other group of lines at least once so as to arrange said transmission lines and said reception lines;
connecting said plurality of transmission lines and said plurality of reception lines thus arranged to said fixing portion; and
adhesively attaching said plurality of transmission lines and said plurality of reception lines to said substrate.

6. The method for manufacturing the matrix sensor as claimed in claim 5, wherein when said plurality of transmission lines and said plurality of reception lines are arranged, every K lines (K represents an integer) of said transmission lines and every L lines (L represents an integer) of said reception lines are alternately arranged while overlaid on previously-arranged lines.

7. The method for manufacturing the matrix sensor as claimed in claim 6, wherein when said transmission lines and said reception lines are alternately arranged, every predetermined number of lines above two lines in said transmission lines and said reception lines are alternately arranged while overlaid on the predetermined number of previously-arranged lines.

8. The method for manufacturing the matrix sensor as claimed in claim 6, wherein when said transmission lines and said reception lines are arranged, said transmission lines and said reception lines are alternately arranged one by one while overlaid on a previously-arranged line.

9. The method for manufacturing the matrix sensor as claimed in claim 5, wherein said fixing portion of said substrate is fabricated by adhesively attaching a routing substrate at a predetermined position on said substrate.
